# EUROPÄISCHE PATENTSCHRIFT

(11) **EP 2 304 314 B1**
(45) Veröffentlichungstag und Bekanntmachung des Hinweises auf die Patenterteilung: **23.11.2011**
(21) Anmeldenummer: 10743013.4
(22) Anmeldetag: 21.06.2010
(51) Int. Cl.: F21V 23/04, F21S 10/00, F21V 29/00, H05K 1/02, G08B 13/00, F21Y 101/02, F21S 8/00, F21S 8/08, F21S 8/04

(54) **LEUCHTKÖRPER**
LAMP
CORPS LUMINEUX

(30) Priorität: 23.06.2009 DE 102009030232; 20.11.2009 DE 202009015826 U; 08.04.2010 DE 102010014241
(43) Veröffentlichungstag der Anmeldung: 06.04.2011
(73) Patentinhaber: Steinel GmbH, 33442 Herzebrock (DE)
(72) Erfinder: MÖLLER, Thomas, 32049 Herford (DE); SEHLHOFF, Stefan, 33442 Herzebrock-Clarholz (DE); WOLFF, Markus, 59510 Lippetal (DE); BERHEIDE, Herwig, 33442 Herzebrock-Clarholz (DE)
(74) Vertreter: Wagner, Kilian
(86) Internationale Anmeldenummer: PCT/EP2010/003719
(87) Internationale Veröffentlichungsnummer: WO 2010/149324

(56) Entgegenhaltungen:
- EP-A2- 1 005 004
- DE-U1- 29 705 569
- US-A- 5 803 589
- US-A1- 2004 036 603

## Beschreibung

Die Erfindung betrifft einen Leuchtkörper mit mindestens zwei unabhängig voneinander aktivierbaren Leuchtmitteln.

Aus der US 2004/036603 A1 ist ein Haus mit mehreren eckseitig angeordneten Leuchtkörpern bekannt, wobei die ausleuchtbaren Flächensegmente der Leuchtkörper voneinander beabstandet sind uns sich hinter jedem Flächensegment ein Leuchtmittel befindet. Den Leuchtkörpern sind Bewegungssensoren zugeordnet, durch die die Leuchtkörper bereits in einem großen Abstand von einer sich bewegenden Person aktivierbar sind.

Die DE 297 05 569 U1 beschreibt allgemein eine Sensorleuchte.

Zum allgemeinen Stand der Technik werden weiterhin genannt die US 5803589 A sowie die EP 1 005 004 A2.

Leuchtkörper sind in vielerlei unterschiedlichen geometrischen Ausgestaltungen bekannt. Auch unterscheiden sich bekannte Leuchtkörper hinsichtlich ihres Bedienkonzeptes. So sind Leuchtkörper mit integralen Bewegungssensoren zum berührungslosen Aktivieren derselben bekannt, wobei die Sensoren Bewegungen üblicherweise in einem Radius von etwa 10 m oder darüber hinaus erkennen. Neben den berührungslos aktivierbaren Leuchtkörpern sind mittels eines manuellen Schalters aktivierbare Leuchtkörper Stand der Technik. Es bestehen Bestrebungen der Leuchtkörperhersteller neue Produkte durch ästhetisch ansprechende Beleuchtungseffekte oder Bedienkonzepte bereitzustellen.

Der Erfindung liegt daher die Aufgabe zugrunde, einen Leuchtkörper anzugeben, mit dem ansprechende optische Effekte erzielbar sind.

Diese Aufgabe wird mit einem Leuchtkörper mit mindestens zwei aneinander angrenzenden, ausleuchtbaren Flächensegmenten gelöst, denen jeweils mindestens ein Leuchtmittel zugeordnet und hinter dem jeweiligen Flächensegment angeordnet ist, wobei die mindestens zwei Leuchtmittel unabhängig voneinander manuell und berührungslos im Nahfeld vor dem jeweiligen Flächensegment aktivierbar sind, so dass die mindestens zwei Flächensegmente unabhängig voneinander ausleuchtbar sind.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung kombiniert ein ansprechendes Bedienkonzept auf geschickte Weise mit einem beeindruckenden Ausleuchtkonzept dadurch, dass ein erstes und mindestens ein zweites Flächensegment, insbesondere Oberflächensegmente, vorgesehen werden, die unmittelbar aneinander angrenzen, wobei die Flächensegmente unabhängig voneinander ausleuchtbar, d.h. die den Flächensegmenten zugeordneten Leuchtmittel unabhängig voneinander aktivierbar sind, so dass die Flächensegmente gemeinsam oder einzeln ausgeleuchtet werden können, vorzugsweise derart, dass die bei einer gemeinsamen Beleuchtung beider Flächensegmente keine Grenzfläche zwischen den Flächensegmenten sichtbar ist und bei voneinander separater Ausleuchtung eine scharfe Grenze zwischen dem ausgeleuchteten Flächensegment und dem unausgeleuchteten Flächensegment erkennbar ist. Wesentlich zur Erzielung des gewünschten Effektes ist das beanspruchte Bedienkonzept, nach dem die dem jeweiligen Flächensegment zugeordneten Leuchtmittel manuell und berührungslos, vorzugsweise durch eine Wischbewegung vor dem jeweiligen Flächensegment, aktivierbar sind. Anders ausgedrückt können die dem ersten Flächensegment zugeordneten und hinter diesem angeordneten Leuchtmittel berührungslos durch Anwesenheit oder Bewegung im Nahfeld, d.h. innerhalb eines Abstandes vom Flächensegment von weniger als 10 cm, vorzugsweise von weniger als 5 cm, aktiviert werden und die dem zweiten Flächensegment zugeordneten Leuchtmittel durch eine Anwesenheit oder Bewegung im Nahfeld vor dem zweiten Flächensegment. Durch die Kombination dieses Bedienkonzeptes mit aneinander angrenzenden, vorzugsweise vollständig, ausleuchtbaren Flächensegmenten entsteht ein völlig neuer, überraschend visueller Effekt beim Betrachter bzw. Bediener. Bevorzugt sind die Leuchtmittel nicht nur unabhängig voneinander manuell und berührungslos im Nahfeld vor dem jeweiligen Flächensegment aktivierbar, sondern auch auf diese Weise, d.h. durch Anwesenheits- oder Bewegungsdetektion, wieder deaktivierbar.

Grundsätzlich ist es möglich, die unmittelbar aneinander angrenzenden Flächensegmente aus zwei miteinander verbundenen Bauteilen auszubilden. Besonders bevorzugt ist es jedoch, wenn die Flächensegmente nahtlos ineinander übergehen, d.h. einstückig, vorzugsweise aus einem Guss ausgebildet sind.

In Weiterbildung der Erfindung ist mit Vorteil vorgesehen, dass als Leuchtmittel Leuchtdioden vorgesehen sind. Durch Leuchtdioden kann die Wärmeemission minimiert werden, wodurch wiederum nur vergleichsweise kleine Kühlflächen vorgesehen werden müssen, was wiederum die Realisierung geringer Abmessungen des Leuchtkörpers ermöglicht. Darüber hinaus kann mit Hilfe von Leuchtdioden, vorzugsweise von mehreren verteilt angeordneten Leuchtdioden pro Flächensegment eine vollständige, abgegrenzte Ausleuchtung des jeweiligen Flächensegmentes erreicht werden.

Ganz besonders bevorzugt ist jedem ausleuchtbaren Flächensegment jeweils ein Nahfeldsensor, insbesondere Hochfrequenzsensor, vorzugsweise Radarsensor, zugeordnet, der mit dem den jeweiligen Flächensegment zugeordneten Leuchtmitteln wirkverbunden ist, derart, dass wenn von dem Nahfeldsensor eine Bewegung oder eine Anwesenheit vor dem jeweiligen Flächensegment detektiert wird die Leuchtmittel dauerhaft, oder bis zur Deaktivierung oder für eine definierte Zeitspanne aktiviert werden.

Besonders zweckmäßig ist eine Ausführungsform des Leuchtkörpers, bei der die Nahfeldsensoren, insbesondere gemeinsam mit den jeweiligen Leuchtmitteln hinter den Flächensegmenten angeordnet sind. Anders ausgedrückt, befindet sich bevorzugt hinter jedem ausleuchtbaren Flächensegment ein Nahfeldsensor und mindestens ein Leuchtmittel, vorzugsweise eine Gruppe von LEDs.

Die Flächensegmente bzw. die Leuchtkörperoberfläche ist bevorzugt derart ausgebildet, dass die hinter den Flächensegmenten angeordneten Leuchtmittel die Flächensegmente durchleuchten können. Besonders bevorzugt sind die Flächensegmente hierzu aus Kunststoff oder Glas ausgebildet, wobei besonders gute optische Effekte dadurch erreicht werden können, dass der Kunststoff oder das Glas opak eingefärbt sind. Bevorzugt sind die Flächensegmente aus nicht durchsichtigem, jedoch lichtdurchlässigem Material, insbesondere Kunststoff oder Glas ausgebildet. Ganz besonders bevorzugt sind die ausleuchtbaren Flächensegmente aus Kryolithglas (Opalglas) gefertigt. Hierbei handelt es sich um getrübtes, milch-weiß erscheinendes Glas. Auch ist es möglich, transparentes Material mit einem nicht durchsichtigen, jedoch lichtdurchlässigen Material zu beschichten. Besonders beeindruckende optische Effekte können dadurch erzielt werden, dass die mindestens zwei Flächensegmente winklig zueinander angeordnet werden, um hierdurch, obwohl die Flächensegmente unmittelbar aneinander angrenzen eine scharfe optische Trennung bei separater Ausleuchtung zu erzielen. Besonders beeindruckend sind die erzielbaren optischen Effekte bei einer rechtwinkligen Anordnung der mindestens zwei ausleuchtbaren Flächensegmente. Dabei ist es noch weiter bevorzugt, wenn der Leuchtkörper insgesamt als Quader ausgeformt ist, vorzugsweise als Kubus, also mit insgesamt gleich langen Seitenkanten. Mit Vorteil beträgt die Seitenkantenlänge 10 bis 15 cm, noch weiter bevorzugt 11 cm. Noch weiter bevorzugt ist es dabei, wenn sämtliche resultierenden sechs Flächensegmente unabhängig voneinander ausleuchtbar sind, d.h. dass hinter jedem der sechs Flächensegmente ein Nahfeldsensor und mindestens ein Leuchtmittel angeordnet ist. Auch ist es denkbar, dass lediglich fünf Flächensegmente unabhängig voneinander ausleuchtbar sind, insbesondere dann, wenn eines der sechs Flächensegmente zu einer Decke, zu einer Tragfläche oder zu einer Wand ausgerichtet ist.

Die erzielbaren optischen Effekte können dadurch weiter verbessert werden, dass die Flächensegmente als ebene, vorzugsweise, zumindest näherungsweise, zweidimensionale, d.h. plattenförmige, Flächensegmente ausgestaltet sind.

Im Hinblick auf die konkrete Anordnung der Leuchtmittel gibt es unterschiedliche Möglichkeiten. Ganz besonders bevorzugt ist es eine Ausführungsform, bei der die Leuchtmittel in einem gemeinsamen, außen von den Flächensegmenten begrenzten Raum angeordnet sind und die Leuchtmittel derart ausgerichtet und angeordnet sind, dass sie jeweils nur das ihnen zugeordnete Flächensegment ausleuchten. Bei einer derartigen Ausführungsform ist es weiter bevorzugt, wenn die Flächensegmente winklig, insbesondere rechtwinklig zueinander angeordnet sind, um eine optische Trennung bei den unmittelbar aneinander angrenzenden Flächensegmenten zu erzielen.

Bei einer alternativen Ausführungsvariante des Leuchtkörpers sind die den unterschiedlichen Flächensegmenten zugeordneten Leuchtmittel nicht in einem gemeinsamen Raum angeordnet, sondern jedem Flächensegment ist im Innern des Leuchtkörpers eine Kammer zugeordnet, in der die dem Flächensegment zugeordneten Leuchtmittel, bevorzugt zusammen mit einem Nahfeldsensor angeordnet sind, wobei die Kammerwände eine Ausleuchtung benachbarter Flächensegmente mittels der einem Flächensegment zugeordneten Leuchtmittel sicher verhindern. Bevorzugt sind die Kammerwände von außerhalb des Leuchtkörpers nicht zu erkennen.

Wie zuvor erläutert, ist bei einer bevorzugten Ausführungsvariante des Leuchtkörpers vorgesehen, dass die Flächensegmente eine ebene, d.h. im Wesentlichen zweidimensionale Oberfläche aufweisen. Gemäß einer alternativen, ebenfalls bevorzugten Ausführungsform ist-vorgesehen, dass die Flächensegmente dreidimensional ausgeformt sind. Hierdurch kann ein nahezu beliebig ausgeformter Leuchtkörper in unterschiedliche, aneinander angrenzende Flächensegmente unterteilt werden, die unabhängig voneinander ausleuchtbar sind.

Besonders vorteilhaft ist eine Ausführungsvariante des Leuchtkörpers, bei der die Außenoberfläche des Leuchtkörpers ausschließlich aus ausleuchtbaren Flächensegmenten ausgebildet ist, wobei zumindest jeweils zwei benachbarte Flächensegmente unmittelbar aneinander angrenzen. Bei einer alternativen Ausführungsform sind mindestens zwei unabhängig voneinander ausleuchtbare Flächensegmente mit mindestens einem nicht ausleuchtbaren Flächensegment kombiniert.

Der Leuchtkörper kann auf vielfältige Weise im Raum angeordnet werden. So ist es denkbar, den Leuchtkörper an einer Wand festzulegen, wobei es dabei besonders bevorzugt ist, wenn die Befestigungsmittel zum Festlegen des Leuchtkörpers an der Wand an einer Seitenkante oder an einem Eck des Leuchtkörpers angeordnet sind und nicht mittig an einem Flächensegment, wobei auch eine derartige Ausführungsform realisierbar ist. Zusätzlich oder alternativ können Befestigungsmittel zum Festlegen des Leuchtkörpers an einer Decke, insbesondere einer Raumdecke oder auf Ständer, insbesondere einem säulenförmigen Ständer vorgesehen werden. Wenn dem Leuchtkörper ein Ständer, insbesondere ein säulenförmiger Ständer, zugeordnet ist, kann bei Bedarf auch auf Befestigungsmittel verzichtet und der Leuchtkörper auf den Ständer flächig abgestellt werden.

Ganz besonders bevorzugt ist eine Ausführungsvariante des Leuchtkörpers, bei der mehrere der Kammern, vorzugsweise jede Kammer, vorzugsweise auf der von dem Flächensegment abgewandten Seite von jeweils einer Leiterplatte begrenzt sind/ist, die die jeweiligen Leuchtmittel und den zugehörigen Nahfeldsensor trägt. Dabei ist es besonders bevorzugt, wenn die Leiterplatte, zumindest näherungsweise, parallel zu dem zugehörigen Flächensegment angeordnet ist, so dass das Flächensegment die Kammer auf der Vorderseite begrenzt. Ganz besonders bevorzugt ist es, wenn als Leuchtmittel LEDs vorgesehen sind. Besonders zweckmäßig ist es, wenn pro Leiterplatte mehrere, insbesondere vier, LEDs vorgesehen sind, wobei es noch weiter bevorzugt ist, wenn die LEDs auf den Enden eines gedachten Rechtecks angeordnet sind. Im Hinblick auf die konkrete Ausbildung der zum jeweiligen Nahfeldsensor gehörenden Antenne gibt es unterschiedliche Möglichkeiten. Besonders bevorzugt ist es, wenn es sich bei der Antenne um eine in die Leiterplatte geätzte Antenne handelt.

Ganz besonders bevorzugt ist es, wenn ein aus acht Leiterplatten gebildeter Kubus vorgesehen ist, der zentrisch im Leuchtkörper angeordnet ist. Besonders bevorzugt werden die Leiterplatten hierzu von einer, beispielsweise als Kunststoffspritzgussteil ausgebildeten Tragkonstruktion getragen, die sich noch weiter bevorzugt innerhalb des von den Leiterplatten gebildeten Kubus befindet.

Wie zuvor erläutert, ist es bevorzugt, wenn die Kammern jeweils von einem Flächensegment und einer Leiterplatte auf Vorder- bzw. Rückseite begrenzt sind. Bevorzugt sind die Kammern in einem Bereich zwischen Flächensegment und Leiterplatte von Reflektorelementen begrenzt, wobei die Reflektorelemente derart angeordnet sind, dass diese jeweils zwei benachbarte Kammern (optisch) voneinander separieren, vorzugsweise derart, dass die Leuchtmittel einer ersten Kammer nicht das Flächensegment einer zweiten, benachbarten Kammer beleuchten können. Besonders bevorzugt ist es, wenn die Reflektorelemente eine Doppelfunktion haben, also nicht nur für eine optische Separierung der Kammern Sorge tragen, sondern zudem als Wärmebrücke bzw. Wärmeleitmittel dienen, um die im Betrieb der Leuchtmittel entstehende Wärme abzuführen. Zu diesem Zweck ist es bevorzugt, wenn die Reflektorelemente mit den Leiterplatten wärmeleitend verbunden sind - bevorzugt ist jedes Reflektorelement wärmeleitend mit mindestens einer zugeordneten Leiterplatte verbunden, insbesondere dadurch, dass das Reflektorelement mit einem, insbesondere metallischen, Leiterplattenrahmen verbunden ist. Im Hinblick auf die konkrete Ausbildung bzw. Materialwahl zur Herstellung der Reflektorelemente gibt es unterschiedliche Möglichkeiten. Besonders bevorzugt ist es im Hinblick auf eine gute Wärmeleitfähigkeit, die Reflektorelemente als Metallbleche auszubilden. Alternativ ist es denkbar, die Reflektorelemente als Kunststoflspritzgussteile auszubilden, wobei es in diesem Fall bevorzugt ist, einen wärmeleitenden Kunststoff einzusetzen oder den Kunststoff mit wärmeleitenden Partikeln, insbesondere Metallpartikeln, zu versetzen.

Im Hinblick auf die Befestigung der Reflektorelemente an den Leiterplatten bzw. den Leiterplattenrahmen gibt es unterschiedliche Möglichkeiten. Denkbar ist es, das Reflektorelement mit Haltelaschen des Leiterplattenrahmens zu verlöten. Steck- bzw. Clipkonstruktionen sind ebenfalls alternativ realisierbar.

Besonders bevorzugt ist eine Ausführungsvariante, bei der mindestens ein, vorzugsweise ausschließlich ein, Reflektorelement mit einem, insbesondere von mindestens einem Stab, vorzugsweise von zwei Stäben gebildeten, Leuchtkörperfuß (Ständer) verbunden ist, der noch weiter bevorzugt aus Metall ausgebildet ist, um die Wärme über das Reflektorelement und ggf. ein Adapterstück an den Fuß (Ständer) und über diesen an die Umgebung ableiten zu können. Der Fuß (Ständer) dient bevorzugt als Wärmesenke.

Besonders zweckmäßig ist eine Ausführungsvariante des Leuchtkörpers, bei der die Leuchtmittel und die Nahfeldsensoren, welche bevorzugt sämtliche auf Leiterplatten angeordnet sind, im ausgeschalteten Zustand der Leuchtmittel nicht sichtbar sind. Bevorzugt sind die Flächensegmente hierzu milchglasartig getrübt.

In Weiterbildung der Erfindung ist mit Vorteil vorgesehen, dass mindestens zwei unterschiedlichen Flächensegmenten zugeordnete Nahfeldsensoren, insbesondere sämtlichen Nahfeldsensoren, ein gemeinsamer Steuermoduscontroller zugeordnet ist, der derart ausgebildet ist, dass dieser auf eine gleichzeitige oder zeitlich versetzte Aktivierung von mindestens zwei unterschiedlichen Nahfeldsensoren reagiert bzw. einen Betriebsmodus startet oder beendet. Auf diese Weise können unterschiedliche Betriebsmodi auf elegante Weise aktiviert oder deaktiviert werden. So kann beispielsweise ein erster Betriebsmodus dadurch ausgelöst werden, dass zwei um 90° zueinander versetzte Nahfeldsensoren gleichzeitig aktiviert werden oder ein zweiter, von dem ersten Betriebsmodus unterschiedlicher Betriebsmodus dadurch gestartet wird, dass zwei parallel angeordnete Nahfeldsensoren gleichzeitig aktiviert werden. Bevorzugt werden unterschiedliche Betriebsmodi in Abhängigkeit der gleichzeitig aktivierten Nahfeldsensorkombination ausgeführt. So ist beispielsweise denkbar, dass sämtliche Leuchtmittel des Leuchtkörpers eingeschaltet werden, wenn zwei bestimmte Nahfeldsensoren gleichzeitig aktiviert werden und wieder ausgeschaltet werden, wenn diese zwei oder ein anderes Paar von Nahfeldsensoren gleichzeitig aktiviert wird. Auch ist es denkbar, dass durch eine gleichzeitige Aktivierung zweier Nahfeldsensoren nur eine bestimmte Anzahl an Leuchtmitteln, bevorzugt unterschiedlichen Flächensegmenten zugeordnete Leuchtmittel, aktiviert werden, beispielsweise nur die nach oben und unten ausgerichteten Leuchtmittel.

Besondere Ausführungsvarianten ergeben sich aus den folgenden Weiterbildungen der mindestens einen die Leuchtmittel tragenden Leiterplatte.

In erfindungsgemäß vorteilhafter Weise ist dabei die Leiterplatte - bevorzugt mit zwei metallisierten Leiterplattenoberflächen zum Ausbilden von jeweiligen Leiterplattenflächen bzw. Leiterbahnen -- vieleckig, bevorzugt rechteckig, weiter bevorzugt quadratisch, so ausgebildet, dass in den Eckbereichen etwa eines Rechtecks oder Quadrats Leistungs-Halbleiterleuchtmittel vorgesehen sein können. Um insoweit erfindungsgemäß eine optimierte Wärmeabfuhr von den Leuchtmitteln zu ermöglichen, werden Bereiche der metallisch - kaschierten Oberfläche der Leiterplatte als metallisierte Flächenabschnitte und Kühlflächen im Sinne der Erfindung benutzt, um die Betriebswärme der Halbleiter-Leuchtmittel abzuführen, wobei geeignete Wärmeleitelemente, etwa weiterbildungsgemäß vorgesehene flächige Reflektorelemente (Reflektorbleche, auch im Sinne der vorbeschriebenen und einbezogenen DE 20 2009 015 826) an oder auf diese metallisierten Flächenabschnitte (ggf. unter Zwischenschaltung von mechanischen Komponenten oder geeigneter Wärmeleitpaste oder dergleichen) gebracht werden können.

Insbesondere im Fall einer rechteckigen bzw. quadratischen Leiterplatte sind diese metallisierten Flächenabschnitte zur Wärmeabfuhr randseitig vorgesehen, weiter bevorzugt randseitig umlaufend, so dass ein zur Wärmeabfuhr maximierter Bereich der Leiterplatte für diese thermische Aufgabe zur Verfügung steht.

Dabei ist erfindungsgemäß vorgesehen, mittig bzw. zentrisch auf bzw. in der Leiterplatte einen Flächenbereich bzw. Durchbruch für ein als Modul vorhandenes, bevorzugt auf einer eigenen, gegenüber der Leiterplatte verkleinerten Sensor-Leiterplatte aufgebaute Sensoreinheit vorzusehen, so dass bereits räumlich innerhalb der Leiterplattengeometrie ein Abstand von (in etwa den Ecken der Leiterplatte sitzenden) Halbleiter-Leuchtmitteln zum mittigen Sensor maximiert ist.

Geometrisch lässt sich zudem eine wirksame Fläche der erfindungsgemäß als Kühlfläche und Kontaktfläche für Wärmeleitelemente (etwa Reflektorbleche) dienenden metallisierten Flächenabschnitte dadurch weiter optimieren, dass die zusätzlich zu den Halbleiter-Leuchtmitteln vorgesehenen und deren Peripherieelektronik ausbildenden elektronischen Bauelemente mit ihrer Anordnung auf der Leiterplatte im Mittelbereich, ideal um die Sensoreinheit bzw. den zugehörigen Flächenbereich bzw. Durchbruch herum, angeordnet sind, so dass ein möglichst großer (metallisierter) Leiterplattenbereich zum Realisieren der thermischen Kühlfläche im Randbereich verbleibt. So ist es etwa weiterbildungsgemäß bevorzugt, eine wirksame Streifenbreite eines von derartigen Bauelementen freien, damit ununterbrochenen und durchgehenden Leiterbahnenbereichs, zumindest entlang eines Randes der Leiterplatte, bevorzugt entlang mehrerer Ränder oder gar umlaufend, so auszubilden, dass die Breite mindestens 10% der zugehörigen Leiterplattenerstreckung, weiter bevorzugt mindestens 15%, noch weiter bevorzugt mindestens 20% dieser Erstreckung beträgt. Entsprechend entsteht die Möglichkeit für eine große wirksame metallisierte Fläche zur Wärmeabfuhr.

Wie vorstehend dargelegt bieten die metallisierten Flächenabschnitte gemäß der Erfindung die Möglichkeit zum Kontaktieren mit Wärmeleitelementen, um für eine weitere Wärmeabfuhr zu sorgen. Weiterbildungsgemäß im Rahmen der Erfindung ist daher vorgesehen, flächige Reflektorelemente wärmeleitend zu kontaktieren, mit einem Vorteil in mehrerer Hinsicht: Einerseits kann, etwa durch geeignete metallische Ausgestaltung dieser flächigen Reflektorelemente, eine wirksame Wärmeabfuhr bewirkt werden, zusätzlich wirken diese Reflektorelemente als Blende bzw. Reflektor für die auf der Leiterplatte sitzenden Leuchtmittel, so dass bei geeigneter Ausgestaltung der Reflektorelemente eine lichttechnische bzw. beleuchtungsmäßige Optimierung erfolgen kann (und als weiterer Vorteil können diese Reflektorelemente zudem so realisiert sein, dass sie eine wirksame hochfrequenzmäßige Sperre bzw. Entkopplung für das Sensorsignal erreichen, wichtig insbesondere für den Fall, dass, wie zuvor beschrieben, eine Mehrzahl von Leiterplatten der vorliegend erfindungsgemäßen Art einander benachbart vorgesehen sind und jeweilige Hochfrequenz-Sensoreinheiten ansonsten eine gegenseitige Störung bewirken würden; mit anderen Worten, die Reflektorelemente ermöglichen zusätzlich eine Ausrichtung bzw. Fokussierung eines Hochfrequenz-Erfassungsbereichs der jeweiligen Sensoreinheit).

Insbesondere in dem Fall, dass - bei bevorzugt viereckiger bzw. quadratischer Leiterplatte -- ein derartiges flächiges Reflektorelement an jeder Randseite vorgesehen ist, entsteht so ein gehäuseartiges Modul, welches zudem weiterbildungsgemäß dadurch verschlossen werden kann, dass, zur Leiterplatte parallel ausgerichtet, der Innenraum mit einer geeignet für die Lichtemission der Halbleiter-Leuchtmittel sowie das Hochfrequenz-Sensorsignal durchlässigen Scheibe verschlossen wird. Wie vorstehend beschrieben bieten die erfindungsgemäßen Maßnahmen die Möglichkeit, die Temperatur im Inneren einer solchen Einheit geeignet abzusenken, insbesondere wenn mindestens einem der Reflektorelemente zusätzlich weitere Mittel zur Wärmeableitung, etwa in ein umgebendes Gehäuse, einen umgebenden Ständer oder dergleichen, zugeordnet sind, wie wiederum in der vorgenannten Anmeldung beschrieben.

Im Ergebnis entsteht mithilfe der erfindungsgemäß beanspruchten Leiterplatte die Möglichkeit, eine kompakte, Leistungs-LEDs aufweisende Leuchteneinheit zu realisieren, welche trotz ihrer Kompaktheit (und der notwendigen Abwärme) thermisch so eingerichtet werden kann, dass gleichwohl ein zuverlässiger Hochfrequenz-Sensorbetrieb, aus der Mitte der Leuchtmittelanordnung heraus und damit besonders kompakt, erfolgen kann..

In Weiterbildung der Erfindung ist vorgesehen, dass als Leuchtmittelträger für eine Mehrzahl von als Leuchtmitteln D1, D2, D3, D4 ausgebildeten Leuchtmittel 13a bis 13f, insbesondere Leistungs-LEDs, ausgebildete Leiterplatte 110, die zum Halten und Kontaktieren elektronischer Bauelemente 120 für eine den Halbleiter-Leuchtmitteln vorgeschaltete Treiber- und Steuerelektronik ausgebildet ist.

In Weiterbildung der Erfindung ist vorgesehen, dass die Leiterplatte 110 mittig einen zum Ein- oder Aufsetzen einer modulartig ausgebildeten Hochfrequenz-Sensoreinheit 116 bemessenen Flächenbereich und/oder Durchbruch 112 aufweist, die Mehrzahl der Halbleiter-Leuchtmittel randseitig und/oder in Eckbereichen auf der Leiterplatte 110 vorgesehen ist und metallisierte Flächenabschnitte 130 der Leiterplatte 110 so mit den Halbleiter-Leuchtmitteln zusammenwirken, dass die Flächenabschnitte als Kühlfläche einen Betriebswärmeabfluss der Halbleiter-Leuchtmittel bewirken und zum wärmeleitenden Kontaktieren mit an oder auf die Leiterplatte 110 greifenden Wärmeleitelementen ausgebildet sind.

In Weiterbildung der Erfindung ist vorgesehen, dass die Leiterplatte 110 vieleckig, insbesondere rechteckig, mit in Eckbereichen vorgesehenen Halbleiter-Leuchtmitteln ausgebildet ist, wobei die metallisierten Flächenabschnitte 130 randseitig, insbesondere randseitig umlaufend, ausgebildet sind.

In Weiterbildung der Erfindung ist vorgesehen, dass die großflächig ausgebildeten metallisierten Flächenabschnitte sich zumindest abschnittsweise von einem betreffenden Leiterplattenrand bis zum Flächenbereich bzw. Durchbruch 112 der Sensoreinheit 116 erstrecken.

In Weiterbildung der Erfindung ist vorgesehen, mindestens ein flächiges Reflektorelement, das als Wärmeleitelement mit einem der metallisierten Flächenabschnitte wärmeleitend verbunden ist und als Blende oder Reflektor für mindestens eines der Halbleiter-Leuchtmittel ausgebildet ist.

In Weiterbildung der Erfindung ist vorgesehen, dass eine Mehrzahl der flächigen Reflektorelemente entlang des vieleckig, insbesondere rechteckig, ausgebildeten Umfangs der Leiterplatte 110 zum Realisieren eines Leuchtkörpers oder Leuchtkörpereinsatzes vorgesehen ist.

In Weiterbildung der Erfindung ist vorgesehen, eine einer Mehrzahl von Reflektorelementen zugeordnete, für eine Lichtemission der Halbleiter-Leuchtmittel sowie für ein Hochfrequenz-Sensorsignal der Hochfrequenz-Sensoreinheit 116 durchlässige Scheibe, die parallel zur Leiterplatte 110 gehalten ist und einen von der Leiterplatte 110 und der Mehrzahl der Reflektorelemente gebildeten Innenraum abdeckt oder verschließt.

In Weiterbildung der Erfindung ist vorgesehen, dass eines einer Mehrzahl der Reflektorelemente mit Mitteln zur Wärmeableitung, mit insbesondere einem Fuß oder Ständer eines zugeordneten Gehäuses, thermisch leitend verbunden ist.

In Weiterbildung der Erfindung ist vorgesehen, dass die elektronischen Bauelemente 120 der Treiber- bzw. Schaltelektronik dem Flächenbereich bzw. Durchbruch für die Sensoreinheit 116 benachbart mittig und/oder zentral auf der Leiterplatte 110 so vorgesehen sind, dass randseitig der rechteckigen Leiterplatte eine zumindest abschnittsweise ununterbrochene, von den elektronischen Bauelementen 120 freie Kühlfläche entsteht.

In Weiterbildung der Erfindung ist vorgesehen, dass die ununterbrochene Kühlfläche so ausgebildet ist, dass entlang mindestens eines Randes ein ununterbrochener, von den elektronischen Bauelementen 120 freier Streifen entsteht, dessen Breite R größer als 10%, bevorzugt größer als 15%, weiter bevorzugt größer als 20%, einer Erstreckung E der Leiterplatte 110 in der Richtung der Breite ist.

In Weiterbildung der Erfindung ist vorgesehen, dass die ununterbrochene Kühlfläche so ausgebildet ist, dass entlang mindestens eines Randes ein ununterbrochener, von den elektronischen Bauelementen 120 freier Streifen R entsteht, der mindestens der halben Breite eines Abstands vom betreffenden Rand zum Flächenbereich bzw. Durchbruch der Sensoreinheit 116 entspricht.

In Weiterbildung der Erfindung ist vorgesehen, dass die Hochfrequenz-Sensoreinheit 116 thermisch entkoppelt an oder in der Leiterplatte 110 befestigt ist und mit dieser ein Sensorleuchtenmodul ausbildet.

In Weiterbildung der Erfindung ist vorgesehen, dass eine an der Leiterplatte 110 vorgesehene Hochfrequenz-Sensoreinheit 116 zum Ein- und Ausschalten der Mehrzahl der Halbleiter-Leuchtmittel, insbesondere als Reaktion auf durch die Hochfrequenz-Sensoreinheit 116 detektierte menschliche und/oder manuelle Bewegung in einem Nahfeld vor einem die Leiterplatte 110 aufnehmenden Leuchtengehäuse, ausgebildet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Standleuchte, umfassend einen quaderförmigen Leuchtkörper mit sechs gleichgroßen, rechtwinklig zueinander angeordneten, unabhängig voneinander ausleuchtbaren Flächensegmenten,
- Fig. 2:: in einer schematischen Darstellung einen Aktivierungsvorgang zur Aktivierung von Leuchtmitteln hinter einem frontseitigen Flächensegment,
- Fig. 3:: den Leuchtkörper mit ausgeleuchtetem Front-Flächensegment,
- Fig. 4:: den Leuchtkörper mit ausgeleuchtetem oberem Flächensegment,
- Fig. 5:: den Leuchtkörper mit ausgeleuchteten oberen und unteren Flächensegmenten,
- Fig. 6:: Leuchtkörper, bei dem sämtliche sechs Flächensegmente ausgeleuchtet sind,
- Fig. 7a:: eine Rückansicht des Leuchtkörpers,
- Fig. 7b:: eine Schnittansicht entlang der Schnittlinie A - A gemäß Fig. 7a,
- Fig. 8:: einen Leuchtkörper mit acht kubusförmig angeordneten Flächensegmenten,
- Fig. 9:: das Innere des Leuchtkörpers gemäß Fig. 8, wobei ein aus fünf Flächensegmenten gebildeter Deckel von einem unteren Trägerflächensegment abgehoben wurde,
- Fig. 10:: weitere Details des Leuchtkörpers gemäß den Fig. 8 und 9, wobei ein aus acht Leiterplatten gebildeter innerer Kubus gezeigt ist, der über Reflektorblech mit unteren Trägerflächensegmenten sowie über ein Adapterteil mit einem Fuß (Ständer) des Leuchtkörpers verbunden ist,
- Fig. 11:: den inneren, von Leiterplatten gebildeten Kubus in Alleinstellung,
- Fig. 12:: den Kubus gemäß Fig. 11 teilweise ohne Leiterplatten, wobei
- der: von Kunststoffspritzgussteilen gebildete Rahmen bzw. Träger für Leiterplatten zu erkennen ist,
- Fig. 13:: eine schematische Draufsicht auf eine erfindungsgemäße Leiterplatte in bestücktem Zustand mit Leistungshalbleiter-Leuchtmitteln sowie Peripherieelektronik;
- Fig. 14:: eine Ansicht der Bestückungsseite der Leiterplatte gemäß Fig. 1 mit Leiterplattenlayout und
- Fig. 15:: eine Ansicht der zugehörigen Rückseite, welche die metallisierten Flächenabschnitte als Kühlflächen erkennen lässt.

In den Figuren sind gleiche Elemente und Elemente mit der gleichen Funktion mit den gleichen Bezugszeichen gekennzeichnet.

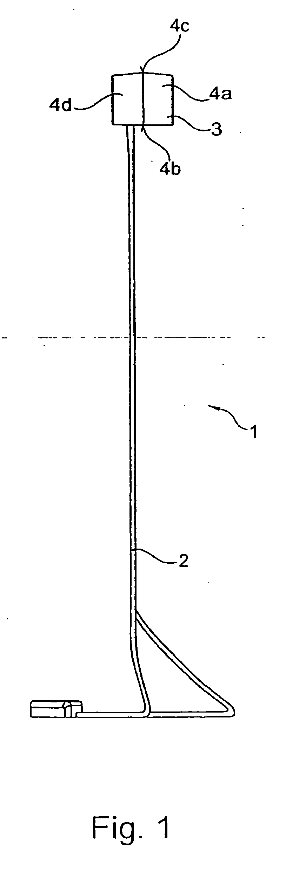

In Fig. 1 ist eine Standleuchte 1, umfassend einen langgestreckten metallischen Ständer 2 sowie einen endseitig an diesem gehaltenen Leuchtkörper 3 gezeigt.

Die Standleuchte 1 umfasst ein nicht gezeigtes, dem Leuchtkörper 3 zugeordnetes externes Netzgerät.

Der Leuchtkörper 3 ist kubusförmig konturiert und relativ zu dem Ständer 2 in einem definierten Winkelbereich von 15° verschwenkbar angeordnet.

Die Außenoberfläche des Leuchtkörpers 3 ist gebildet von insgesamt sechs Flächensegmenten 4a bis 4f, wobei das mit dem Bezugszeichen 4a versehene Flächensegment eine Frontseite, das mit dem Bezugszeichen 4b gekennzeichnete Flächensegment eine Unterseite und das mit 4c gekennzeichnete Flächensegment eine Oberseite bilden. Weiterhin sind zwei seitliche Flächensegmente 4d und 4e (nicht gezeigt) sowie ein rückwärtiges Flächensegment 4f (nicht gezeigt) vorgesehen, wobei der Leuchtkörper 3 im Bereich des rückwärtigen Flächensegmentes 4f am Ständer 2 angelenkt ist. Wesentlich ist, dass sämtliche jeweils benachbarten Flächensegmente unmittelbar aneinander angrenzen.

Sämtliche Flächensegmente 4a bis 4f sind unabhängig ausleuchtbar. Hierzu sind hinter jedem Flächensegment 4a bis 4f nicht gezeigte Leuchtmittel in Form jeweils einer LED-Anordnung platziert. Ebenfalls befindet sich hinter jedem Flächensegment 4a bis 4f ein Nahfeldsensor, hier ein Radarsensor, der eine manuelle, berührungslose Aktivierung der Leuchtmittel ermöglicht, derart, dass die hinter einem Flächensegment angeordneten Leuchtmittel durch eine Handbewegung, vorzugsweise eine Wischbewegung vor dem jeweiligen Flächensegment unabhängig von den Leuchtmitteln benachbarter Flächensegmente aktivierbar und auch wieder deaktivierbar sind.

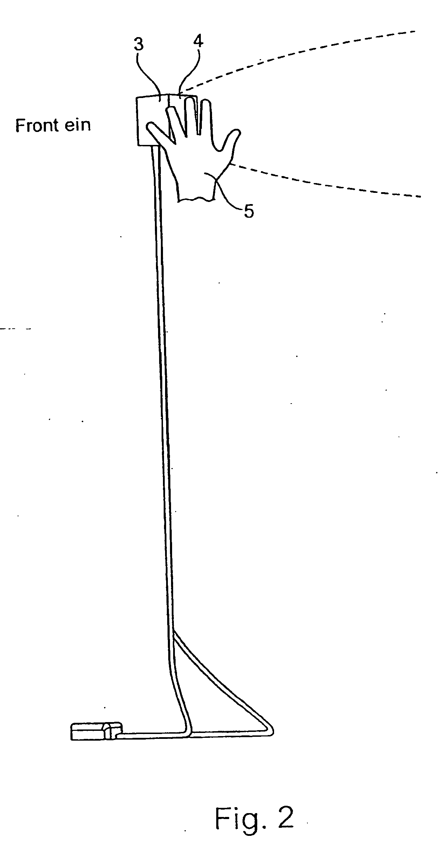

Fig. 2 zeigt schematisch die berührungslose Aktivierung der dem frontseitigen Flächensegment 4a zugeordneten Leuchtmittel durch eine Wischbewegung mittels der Hand 5 einer ansonsten nicht weiter dargestellten Bedienperson im Nahfeld vor dem frontseitigen Flächensegment 4a. Dabei ist der hinter dem Flächensegment 4a angeordnete, also innerhalb des Leuchtkörpers 3 platzierte Nahfeldsensor derart ausgebildet und ausgerichtet, dass diese eine Bewegung in einem Abstandsbereich von etwa 5 cm in Bezug auf das Flächensegment 4a detektiert und bei Detektion einer Bewegung die zugehörigen Leuchtmittel aktiviert bzw. wieder deaktiviert.

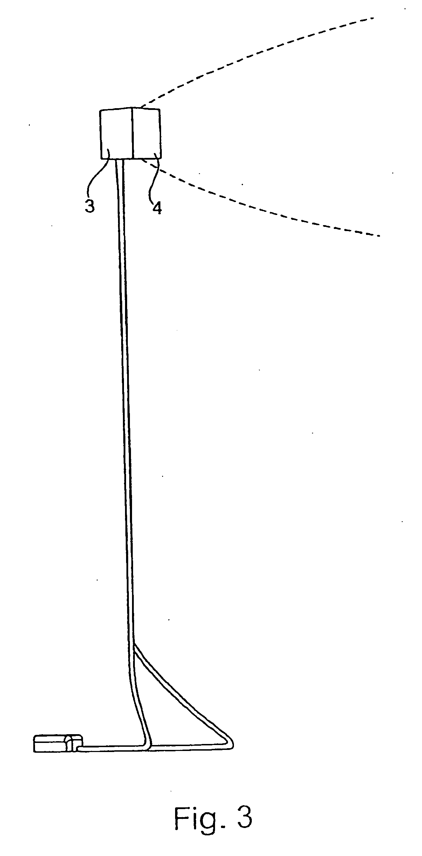

Fig. 3 zeigt den Leuchtkörper 3 mit ausgeleuchtetem, frontseitigem Flächensegment 4a. Wesentlich für die erzielbaren optischen Effekte ist, dass das ebene, quadratförmige frontseitige Flächensegment 4a vollständig ausgeleuchtet ist, jedoch die unmittelbar angrenzenden, rechtwinklig zu dem Flächensegment 4a angeordneten, ebenen Flächensegmente 4b bis 4e nicht mit ausgeleuchtet werden. Das Flächensegment 4a ist derart ausgeleuchtet, dass es als homogene Fläche erscheint. Als Material zur Ausbildung der Flächensegmente 4a bis 4f wurde in dem gezeigten Ausführungsbeispiel Opalglas verwendet. Alternativ kann beispielsweise transparentes Glas mit einer Opalglasschicht vorgesehen werden.

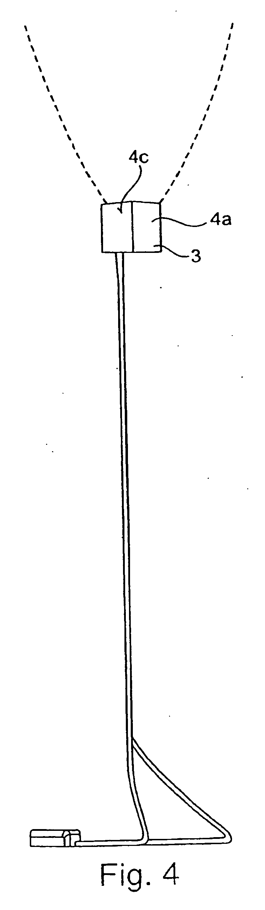

Fig. 4 zeigt den Leuchtkörper 3 mit ausgeleuchtetem oberem Flächensegment 4c. Sämtliche anderen Flächensegmente 4a, 4b, 4d bis 4f sind nicht ausgeleuchtet.

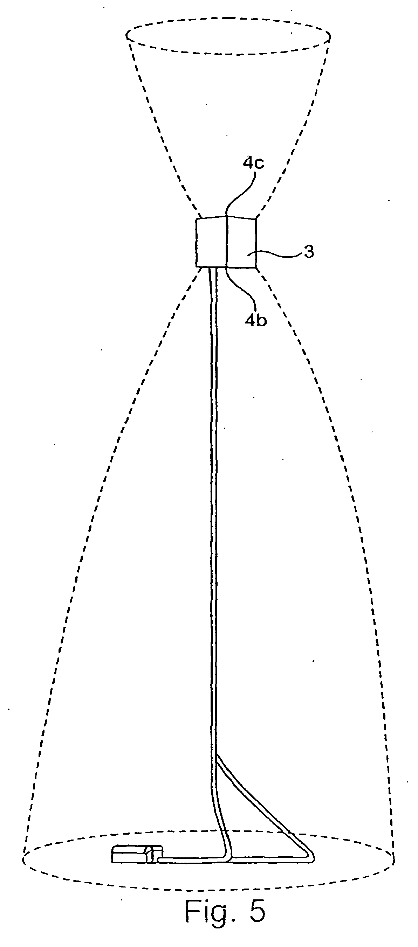

Fig. 5 zeigt einen Beleuchtungszustand, bei dem die voneinander abgewandten oberen und unteren Flächensegmente 4b, 4c durch Aktivierung der jeweils zugeordneten Leuchtmittel ausgeleuchtet sind. Sämtliche anderen Flächensegmente 4a und 4d bis 4f sind nicht ausgeleuchtet, d.h. die diesen zugeordneten Leuchtmittel sind deaktiviert.

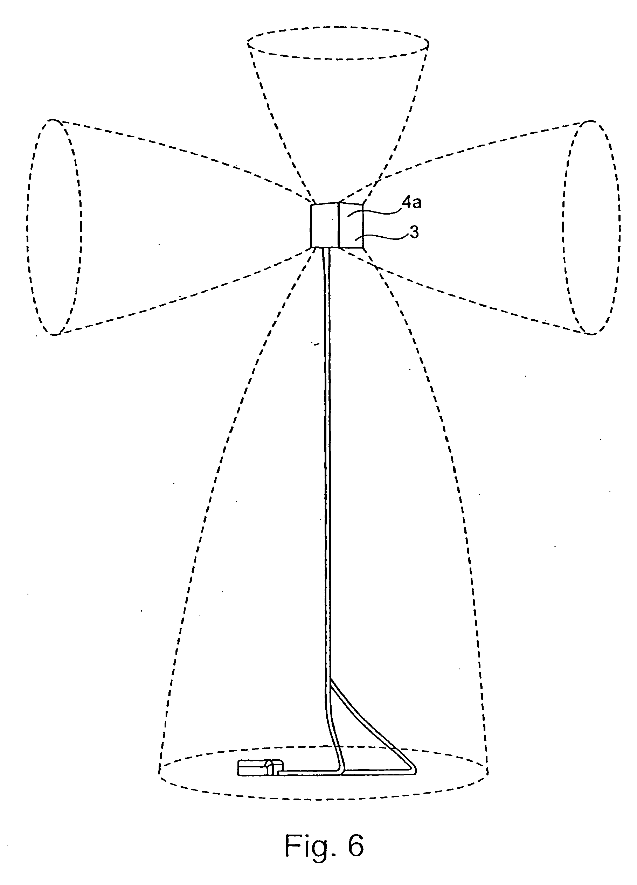

Fig. 6 zeigt einen Beleuchtungszustand des Leuchtkörpers 3, bei dem sämtliche Flächensegmente 4a bis 4f ausgeleuchtet sind, d.h. es sind sämtliche im Leuchtkörper 3 angeordnete Leuchtmittel aktiviert.

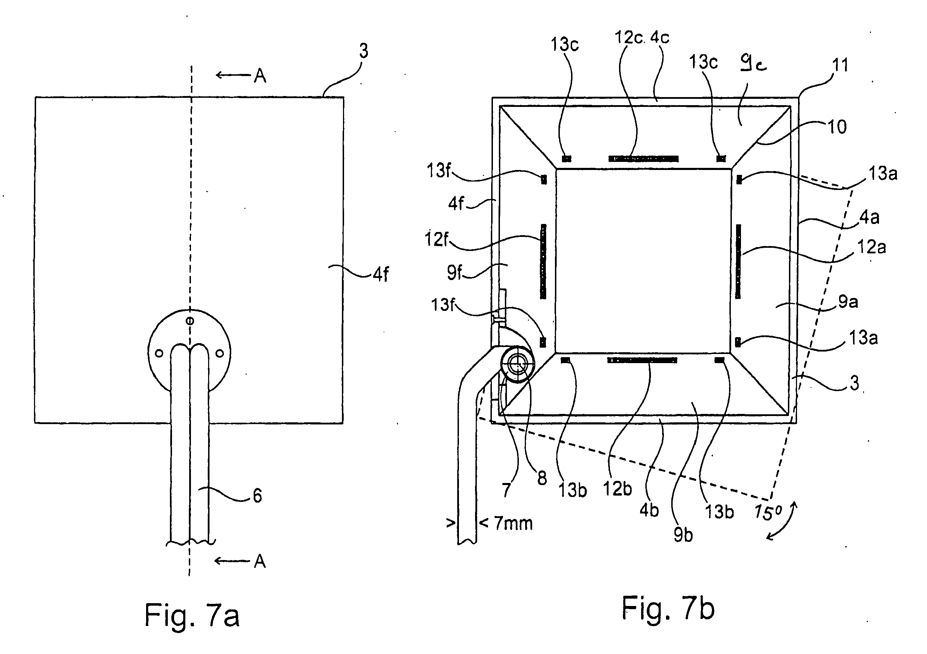

Fig. 7a zeigt eine Ansicht auf das rückwärtige Flächensegment 4f des Leuchtkörpers 3. Das rückwärtige Flächensegment 4f ist durchsetzt von zwei metallischen Stäben 6 des Ständers 2, die im Bereich hinter dem rückwärtigen Flächensegment 4f gelenkig über Befestigungsmittel 7 an den Leuchtkörper 3 angebunden sind (vgl. Fig. 7b). Die Befestigungsmittel 7 erlauben eine Verschwenkung des Leuchtkörpers um eine parallel zum unteren Flächensegment 4b verlaufenden Schwenkachse 8.

Wie sich aus Fig. 7b ergibt, ist im Bereich hinter jedem Flächensegment 4a bis 4f eine Kammer 9a bis 9f angeordnet, wobei jede Kammer 9a bis 9f außen von dem zugehörigen Flächensegment 4a bis 4f begrenzt ist. Seitenwände 10 der Kammer 9a bis 9f verlaufen schräg bis zu den Seitenkanten 11 des Leuchtkörpers, an denen die Flächensegmente 4a bis 4f unmittelbar aneinanderstoßen und verhindern somit eine Ausleuchtung benachbarter Flächensegmente.

Innerhalb jeder Kammer 9a bis 9f ist ein in dem gezeigten Ausführungsbeispiel als Radarsensor ausgebildeter Nahfeldsensor 12a bis 12f angeordnet, der Bewegungen im Nahbereich vor dem jeweiligen Flächensegment 4a bis 4f detektiert. Jeder Sensor 12a bis 12f schaltet bei einer Bewegungsdetektierung diesem zugeordnete Leuchtmittel 13a bis 13f. Anders ausgedrückt sind die jeweils einem Flächensegment 4a bis 4f zugeordneten, jeweils als LED-Anordnung ausgebildeten Leuchtmittel 13a bis 13f mit jeweils einem dem Flächensegment 4a bis 4f zugeordneten Nahfeldsensor 12a bis 12f manuell und berührungsfrei im Nahfeld vor dem jeweiligen Flächensegment 4a bis 4f, insbesondere durch eine Wischbewegung von Hand aktivierbar und deaktivierbar.

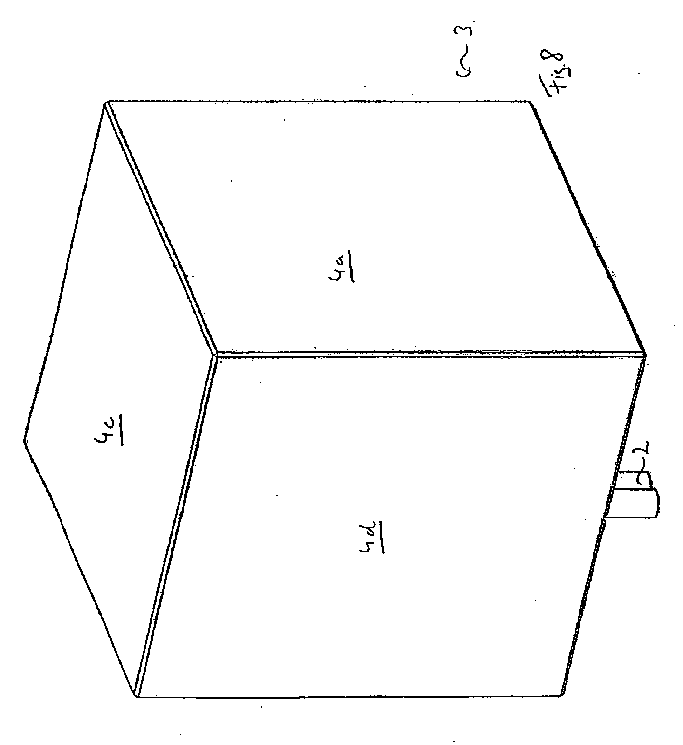

Fig. 8 zeigt einen als Kubus ausgeformten Leuchtkörper in einer Ansicht von außen. In der Ansicht gemäß Fig. 8 sind drei Flächensegmente 4a, 4c, 4d von insgesamt sechs Flächensegmenten 4a bis 4f gezeigt. Jedes Flächensegment hat eine rechteckige, hier quadratische Umfangskontur, wobei die oberen fünf Flächensegmente (vier Seitenflächensegmente und ein Deckelflächensegment) fest miteinander verbunden sind und eine Art Deckel bzw. Aufsatz bilden, der auf einem unteren (Träger-) Flächensegment aufsitzt. Zu erkennen ist ausschnittsweise ein Ständer 2, der in dem gezeigten Ausführungsbeispiel aus Metall ausgebildet ist und welcher, wie anhand der folgenden Figuren noch erläutert werden wird, wärmeableitend mit Leuchtmitteln verbunden ist.

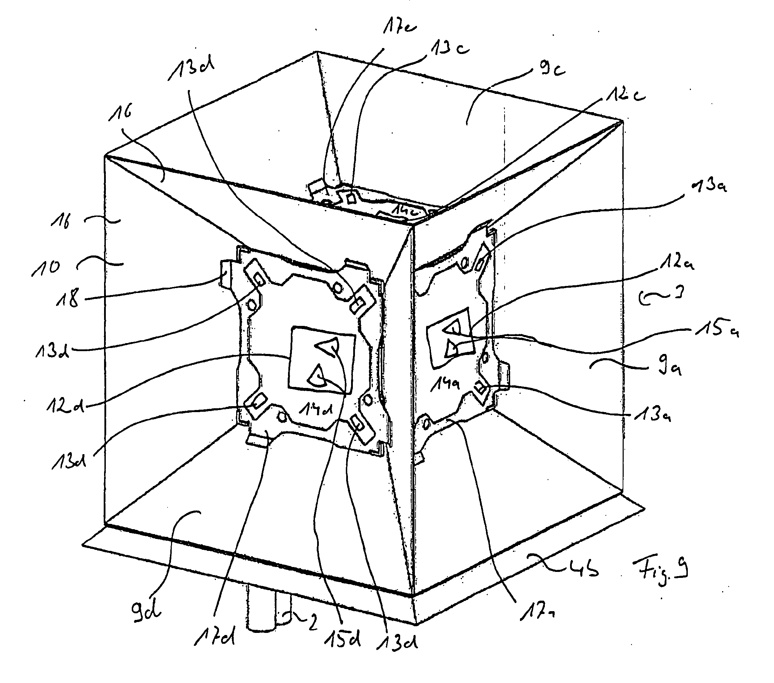

Fig. 9 zeigt das "Innenleben" des Leuchtkörpers 3 gemäß Fig. 8. Zu erkennen ist das untere (Träger-) Flächensegment 4b, welches den von den anderen, nicht gezeigten Flächensegmenten gebildeten Deckel bzw. Aufsatz trägt. Hierzu ist das (Träger-) Flächensegment 4b mit einer seitlichen Schräge versehen, die mit korrespondierenden Schrägen des Aufsatzes formschlüssig zusammenwirkt, so dass bei aufgesetztem Deckel bzw. Aufsatz eine Kubusform resultiert. Zu erkennen sind ferner drei Kammern 9a, 9b, 9d von insgesamt sechs Kammern 9a bis 9f, wobei jede Kammer auf ihrer nach außen gerichteten Vorderseite von einem zugehörigen Flächensegment begrenzt ist. Auf der jeweils vom Flächensegment abgewandten, d.h. inneren Seite wird jede Kammer begrenzt von einer Leiterplatte 14a bis 14f, wobei jede parallel zum zugehörigen Flächensegment 4a bis 4f angeordnete Leiterplatte 14a bis 14f die der jeweiligen Kammer 9a bis 9f zugeordneten Leuchtmittel 13a bis 13f trägt. In dem gezeigten Ausführungsbeispiel sind als Leuchtmittel 13a bis 13f pro Leiterplatte 14a bis 14f insgesamt vier LEDs vorgesehen, die auf den Ecken eines gedachten Quadrates angeordnet sind. Ferner trägt jede mit Abstand zu dem zugehörigen Flächensegment 4a bis 4f angeordnete Leiterplatte 14a bis 14f jeweils einen Nahfeldsensor 12a bis 12f, wobei jeder Nahfeldsensor 12a bis 12f jeweils eine in die Leiterplatte 14a bis 14f eingeätzte Antenne 15a bis 15f umfasst.

In einem Bereich zwischen den äußeren Flächensegmenten 4a bis 4f und den zugehörigen Leiterplatten 14a bis 14f befinden sich schräg angeordnete Seitenwände 10, wobei jede Seitenwand 10 von einem Reflektorelement 16 gebildet ist. Wie sich aus Fig. 9 ergibt, treffen sich jeweils drei Reflektorelemente 16 unter einem Winkel von 120°. Jeweils zwei unmittelbar benachbarte Kammern 9a bis 9f werden optisch von je einer von einem Reflektorelement 16 gebildeten Seitenwand 10 voneinander separiert. Jeder Kammer 9a bis 9f sind insgesamt vier in Umfangsrichtung geschlossen angeordnete Reflektorelemente 16 zugeordnet, wobei sich je zwei benachbarte Kammern 9a bis 9f je ein Reflektorelement 16 teilen. Die Reflektorelemente 16 grenzen also jede Kammer 9a bis 9f von der jeweils benachbarten Kammer 9a bis 9f ab und tragen dafür Sorge, dass die Leuchtmittel 13a bis 13f einer Kammer 9a bis 9f nicht das Flächensegment 4a bis 4f einer benachbarten Kammer 9a bis 9f ausleuchten. Neben dieser Segmentierungsfunktion haben die Reflektorelemente 16 die Aufgabe, die beim Betrieb der Leuchtmittel 13a bis 13f entstehende Wärme abzuführen. Hierzu sind die Reflektorelemente 16 wärmeleitend mit den die Leuchtmittel 13a bis 13f tragenden Leiterplatten 14a bis 14f verbunden und zwar über Leiterplattenrahmen 17a bis 17f, die in dem gezeigten Ausführungsbeispiel aus Metall ausgebildet sind. In dem gezeigten Ausführungsbeispiel weisen die Leiterplattenrahmen 17a bis 17f, die die jeweilige Leiterplatte 14a bis 14f tragen, seitliche, abgewinkelte Laschen 18 auf, mit denen die Reflektorelemente 16 verlötet sind. Alternative Befestigungsmöglichkeiten sind denkbar.

Vier jeweils eine Kammer 9a bis 9f begrenzende Reflektorelemente 16 sind trichterartig angeordnet, wobei der Trichter in jeder Ebene eine rechteckige, hier quadratische, Kontur aufweist.

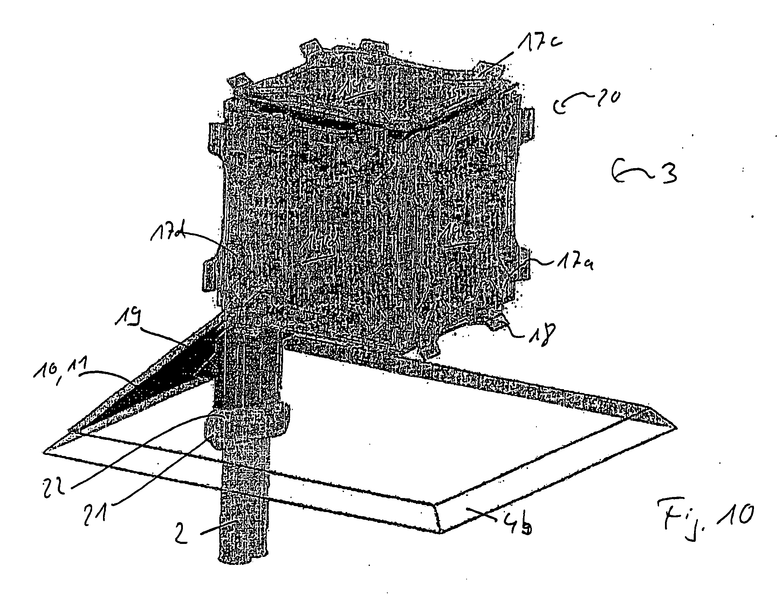

In Fig. 10 sind durch-Weglassen-der meisten Reflektorelemente weitere Details des Aufbaus eines bevorzugten Leuchtkörpers 3 zu erkennen. Das einzige, dargestellte Reflektorelement 16, das nach unten in Richtung (Träger-) Flächensegment 4b orientiert ist, verbindet den Reflektorelementverbund bzw. die Reflektorelementanordnung über ein am Ständer 2 festgelegtes Adapterelement 19 mit dem metallischen Ständer 2 zwecks Wärmeabführung. An dem Ständer 2 ist über das Adapterelement 19 ein innerer Kubus 20, umfassend die sechs Leiterplatten 14a bis 14f, gehalten. Zu erkennen ist, dass das untere (Träger-) Flächenelement 4a von dem Ständer 2 durchsetzt und sandwichartig zwischen dem Adapterelement 19 und einer, ebenfalls von dem Ständer 2 durchsetzten Klemmplatte 21 aufgenommen ist. Die Klemmplatte 21 ist mit Hilfe von Schrauben 22 mit dem Adapterelement 19 verschraubt und hält so das orthogonal zum Ständer 2 orientierte Flächensegment 4b, welches wiederum die übrigen, nicht gezeigten, einen Aufsatz bildenden Flächensegmente trägt.

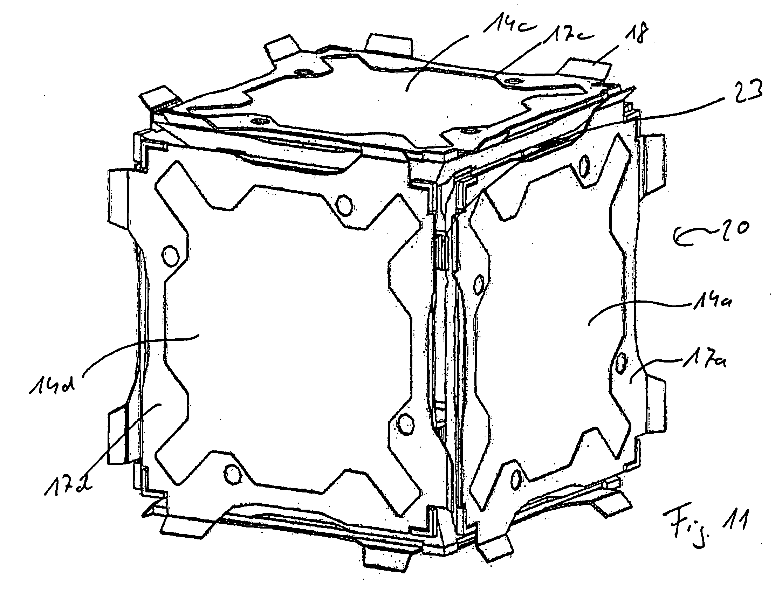

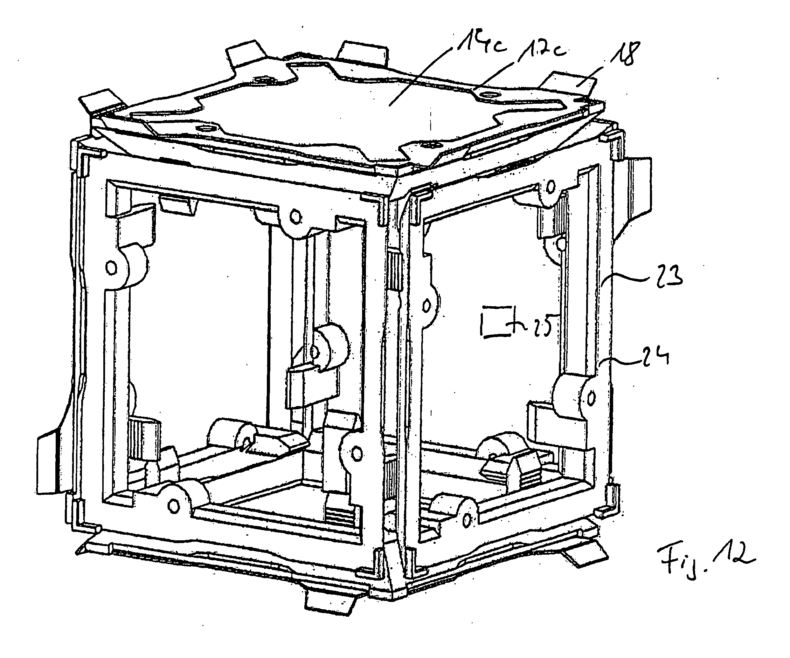

In Fig. 11 ist der innere Kubus 20 gemäß Fig. 10 in Alleinstellung gezeigt. Zu erkennen sind die rechtwinklig zueinander angeordneten Leiterplatten 14a bis 14f, die jeweils an einem metallischen Leiterplattenrahmen 17a bis 17f festgelegt sind, wobei die Leiterplattenrahmen 17a bis 17f an einer Kunststoff-Tragstruktur 23 gehalten sind. Die Kunststoff-Tragstruktur 23 ist deutlich in Fig. 12 zu erkennen. Dort ist zu entnehmen, dass die Tragstruktur 23 von sechs identischen, jeweils als Spritzgussteil ausgebildeten Rahmenteilen 24 gebildet ist, die miteinander verrastet sind.

In Fig. 12 ist stark schematisiert ein Steuermoduscontroller 25 gezeigt, der signalleitend mit den sechs Nahfeldsensoren 12a bis 12f (nicht gezeigt) verbunden ist, wobei der Steuermoduscontroller 25 unterschiedliche Betriebsmodi aktiviert, abhängig davon, welcher der Nahfeldsensoren 12a bis 12f oder welche Nahfeldsensorenkombinationen gleichzeitig oder ggf. zeitlich versetzt aktiviert werden.

In den folgenden Ausführungsbeispielen sind vorteilhafte Ausbildungen der Leiterplatte(n) 14 gezeigt. Diese trägt in den folgenden Ausführungsbeispielen das Bezugszeichen 110.

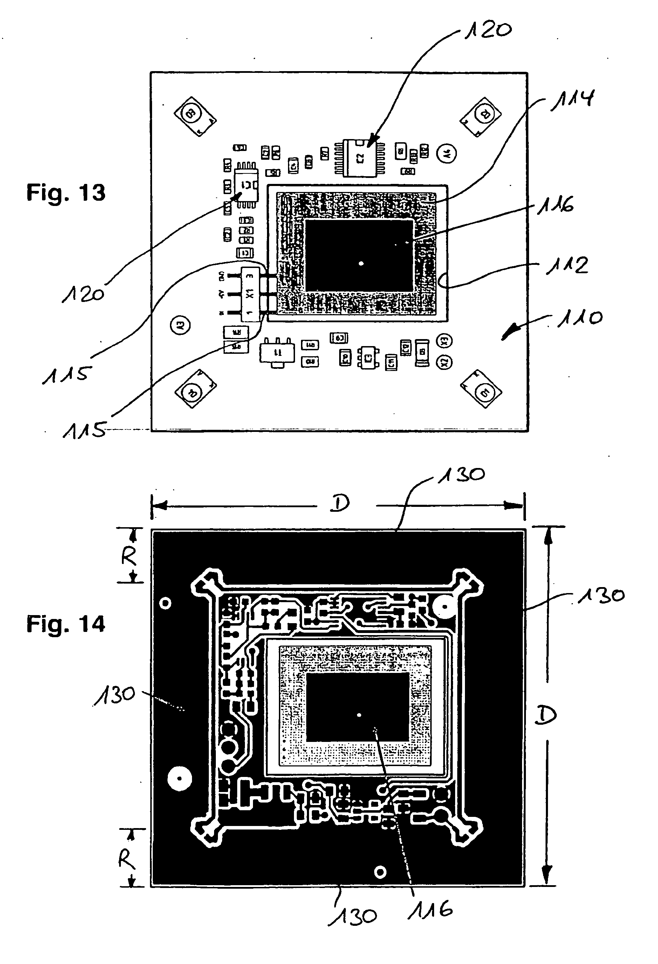

Die Fig. 13 bzw. Fig. 14 zeigt die Bestückungsseite einer Leiterplatte eines typischen Maßes 11 x 11 cm. Diese Leiterplatte 110 weist in ihren Eckbereichen vier Leistungs-LEDs D1 bis D4 auf, welche eine typische Leistung von ca. 1 bis 3 Watt besitzen. Im Zentrum der quadratischen Leiterplatte ist ein rechteckförmiger Ausschnitt 112 im Leiterplattenmaterial gebildet, in welchem -- thermisch über einen Luftspalt entkoppelt - eine modulartig auf einer Hochfrequenz-Leiterplatte 114 gebildete Hochfrequenz-Sensoreinheit 116 eingesetzt und über Drahtbrücken 115 geeignet kontaktiert werden kann.

Die Hochfrequenz-Sensoreinheit 116 ist in ansonsten bekannter Weise als Doppler-Einheit realisiert und bildet einen Bewegungs- Erfassungsbereich in einem Nahfeld aus, welches sich zwischen ca. 10 und ca. 50 cm von der (nicht näher im Detail gezeigten) Sensoroberfläche bzw. dort auf der Hochfrequenz-Leiterplatte 114 integrierten Antennen bzw. Strahlern erstreckt.

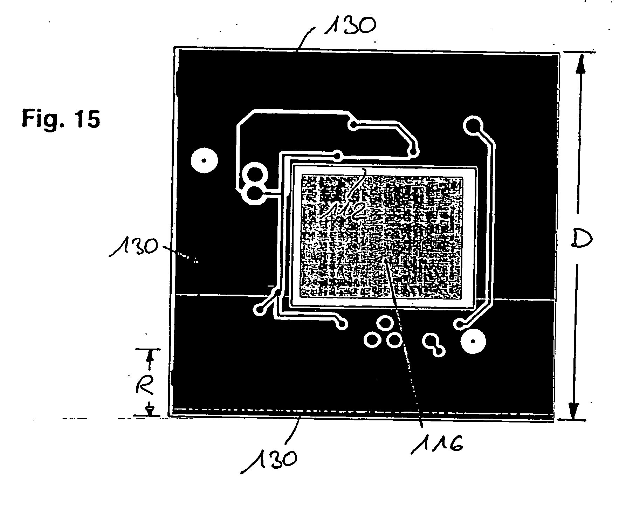

Die Leiterplatte 110 weist, wie insbesondere aus der Draufsicht der Fig. 13 erkennbar ist, eine Mehrzahl von Elektronikbauelementen 120 auf, etwa beinhaltend einen Mikrocontroller, Spannungs- und Stromregler für die LEDs sowie geeignete Verstärker, wobei derartige Peripherieschaltungen als solche bekannt sind. Diese sind, in der Fig. 13 gezeigten Art, konzentriert um den Ausschnitt 112 in der Leiterplatte 110 herum angeordnet, damit mittig bzw. zentrisch orientiert und ermöglichen so, dass ein Randbereich R der Leiterplatte mit einer entsprechenden Randbreite ohne Bestückung durch die Bauelemente 120 bleibt. Wie zusätzlich der Vergleich mit der Rückseite der Fig. 15 verdeutlicht beträgt diese Breite des Randes mit ca. 1,7 cm etwa 15% der Erstreckung D der Leiterplatte (11 cm), so dass auf diese Weise randseitig ein beträchtlicher Flächenbereich 130 unbestückt durch Bauelemente und damit zur Kühlung bzw. Wärmeabfuhr (Fig. 15) verbleibt.

Diese Vorteile werden insbesondere aus der Darstellung der Fig. 15 besonders deutlich, denn die beschriebene Konzentration der elektronischen Bauelemente mit Ausnahme der Halbleiter-Leuchtmittel im Innenbereich ermöglicht eine besonders großflächige, freie und unbestückte, damit durchgängige und für die Wärmeabfuhr günstige Gestaltung von freien metallisierten Flächen 130. Hier kann dann in besonders günstiger Weise und großflächig ein Kontaktieren mit wärmeabführenden Elementen erfolgen, etwa mit Reflektorelementen (Reflektorblechen), wie sie aus der vorstehenden Beschreibung offenbart sind.

### Bezugszeichenliste

- 1: Standleuchte
- 2: Ständer
- 3: Leuchtkörper

- 4a bis 4f: Flächensegment

- 5: Hand
- 6: Stäbe
- 7: Befestigungsmittel
- 8: Schwenkachse

- 9a bis 9f: Kammer

- 10: Seitenwand
- 11: Seitenkante

- 12a bis 12f: Nahfeldsensor

- 13a bis 13f: Leuchtmittel

- 14a bis 14f: Leiterplatten

- 15a bis 15f: Antenne

- 16: Reflektoretement

- 17a bis 17f: Leiterplattenrahmen

- 18: Laschen
- 19: Adapterelement
- 20: Kubus
- 21: Klemmplatte
- 22: Schrauben
- 23: Kunststoff-Tragstruktur
- 24: Rahmenteile
- 25: Steuermoduscontroller

- 110: Leiterplatte
- 112: Ausschnitt
- 114: Hochfrequenz-Leiterplatte
- 115: Drahtbrücke
- 116: Hochfrequenz-Sensoreinheit
- 120: Elektronikbauelement
- 130: Flächenbereich

## Patentansprüche

1. Leuchtkörper mit mindestens zwei ausleuchtbaren Flächensegmenten (4a bis 4f), denen jeweils mindestens ein Leuchtmittel (13a bis 13f) zugeordnet und hinter dem jeweiligen Flächensegment (4a bis 4f) angeordnet ist, wobei die mindestens zwei Leuchtmittel (13a bis 13f) manuell und berührungslos im Nahfeld vor dem jeweiligen Flächensegment (4a bis 4f) aktivierbar sind,
**dadurch gekennzeichnet,**
**dass** die mindestens zwei Flächensegmente (4a bis 4f) aneinander angrenzen und unabhängig voneinander aktivierbar sind, so dass die mindestens zwei Flächensegmente (4a bis 4f) unabhängig voneinander ausleuchtbar sind.

2. Leuchtkörper nach Anspruche 1, **dadurch gekennzeichnet,**
**dass** den mindestens zwei ausleuchtbaren Flächensegmenten (4a bis 4f) jeweils ein mit dem mindestens einen dem jeweiligen Flächensegment (4a bis 4f) zugeordneten Leuchtmittel (13a bis 13f) wirkverbundener Nahfeldsensor (12a bis 12f), insbesondere Hochfrequenzsensor, vorzugsweise Radarsensor, zum Detektieren einer manuellen Aktivierungsbewegung oder Aktivierungsanwesenheit im Nahfeld vor dem jeweiligen Flächensegment (4a bis 4f) zugeordnet ist.

3. Leuchtkörper nach einem der vorhergehenden Ansprüche, **dadurch gekennzeichnet,**
**dass** die Nahfeldsensoren (12a bis 12f) hinter den ausleuchtbaren Flächensegmenten (4a bis 4f) angeordnet sind.

4. Leuchtkörper nach einem der vorhergehenden Ansprüchen, **dadurch gekennzeichnet,**
**dass** die ausleuchtbaren Flächensegmente (4a bis 4f) aus, insbesondere opakem, Kunststoff oder Glas ausgebildet sind, oder eine Schicht aus einem derartigen Material umfassen.

5. Leuchtkörper nach einem der vorhergehenden Ansprüche, **dadurch gekennzeichnet,**
**dass** die mindestens zwei ausleuchtbaren Flächensegmente (4a bis 4f) winklig, vorzugsweise rechtwinklig, zueinander angeordnet sind.

6. Leuchtkörper nach einem der vorhergehenden Ansprüche, **dadurch gekennzeichnet,**
**dass** der Leuchtkörper (3) als Quader, vorzugsweise als Kubus, ausgebildet ist, insbesondere mit ebenen Flächenelementen (4a bis 4f.)

7. Leuchtkörper nach einem der vorhergehenden Ansprüche, **dadurch gekennzeichnet,**
**dass** die Außenoberfläche des Leuchtkörpers (3) vollständig von ausleuchtbaren Flächensegmenten (4a bis 4f) gebildet ist, oder aus einer Kombination von mindestens zwei ausleuchtbaren Flächensegmenten (4a bis 4f) und mindestens einem nicht ausleuchtbaren Flächensegment (4a bis 4f) besteht.

8. Leuchtkörper nach einem der vorhergehenden Ansprüche, **dadurch gekennzeichnet,**
**dass** Mittel zum Befestigen des Leuchtkörpers (3) an einer Wand, an einer Decke oder auf einem, insbesondere säulenförmigen Ständer (2) vorgesehen sind.

9. Leuchtkörper nach einem der vorhergehenden Ansprüche, **dadurch gekennzeichnet,**
**dass** die Leuchtmittel (13a bis 13f) der mindestens zwei ausleuchtbaren Flächensegmente (4a bis 4f) in einem gemeinsamen Raum angeordnet sind, derart, dass sie jeweils ausschließlich das ihnen zugeordnete Flächensegment (4a bis 4f) ausleuchten.

10. Leuchtkörper nach einem der Ansprüche 1 bis 8, **dadurch gekennzeichnet, dass** jedem der mindestens zwei ausleuchtbaren Flächensegmente (4a bis 4f) eine innerhalb des Leuchtkörpers (3) angeordnete, von dem jeweiligen Flächensegment außen begrenzte, die dem jeweiligen Flächensegment (4a bis 4f) zugeordneten Leuchtmittel (13a bis 13f) aufnehmende Kammer (9a bis 9f) zugeordnet ist, wobei die Kammern (9a bis 9f) ein Beleuchten von benachbart zu der Kammer (9a bis 9f) angeordneten Flächensegmente (4a bis 4f) mittels der in der Kammer (9a bis 9f) angeordneten Leuchtmittel (13a bis 13f) verhindernd ausgebildet ist.

11. Leuchtkörper nach Anspruch 10, **dadurch gekennzeichnet,**
**dass** zumindest eines der ausleuchtbaren Flächensegmente (4a bis 4f) eine dreidimensional ausgeformte Oberfläche aufweist.

12. Leuchtkörper nach einem der Ansprüche 10 oder 11, **dadurch gekennzeichnet, dass** mehrere Kammern (9a bis 9f), vorzugsweise jede Kammer (9a bis 9f), vorzugsweise auf der von dem zugehörigen Flächensegment (4a bis 4f) abgewandten Seite, von jeweils einer die jeweiligen Leuchtmittel (13a bis 13f) und den zugehörigen Nahfeldsensor (12a bis 12f) tragenden Leiterplatte (14a bis 14f) begrenzt sind/ist.

13. Leuchtkörper nach einem der Ansprüche 10 bis 12, **dadurch gekennzeichnet, dass** jeweils zwei benachbarte Kammern (9a bis 9f) über ein winklig zu dem jeweils zugehörigen Flächensegment (4a bis 4f) angeordnetes wärmeleitfähiges Reflektorelement (16) voneinander separiert sind, wobei das Reflektorelement (16) wärmeleitend mit der Leiterplatte (14a bis 14f), insbesondere einem, vorzugsweise metallischen, Leiterplattenrahmen (17a bis 17f), verbunden ist.

14. Leuchtkörper nach einem der vorhergehenden Ansprüche, **dadurch gekennzeichnet,**
**dass** die Leuchtmittel (13a bis 13f) und die Nahfeldsensoren (12a bis 12f) im ausgeschalteten Zustand der Leuchtmittel (13a bis 13f) nicht sichtbar angeordnet sind.

15. Leuchtkörper nach einem der vorhergehenden Ansprüche, **dadurch gekennzeichnet,**
**dass** mindestens zwei unterschiedlichen Flächensegmenten (4a bis 4f) zugeordneten Nahfeldsensoren (12a bis 12f) ein gemeinsamer Steuermoduscontroller (25) zugeordnet ist, der auf eine gleichzeitige oder zeitlich versetzte Aktivierung der Nahfeldsensoren (12a bis 12f) mit der Aktivierung und/oder Deaktivierung mindestens eines Betriebsmodus reagierend ausgebildet ist.

## Claims

1. Light fixture having at least two illuminable surface segments (4a to 4f), with each of which at least one illuminant (13a to 13f), arranged behind the respective surface segment (4a to 4f), is associated, the at least two illuminants (13a to 13f) being able to be activated manually and in a contactless manner in the near-field in front of the respective surface segment (4a to 4f), **characterised in that** the at least two surface segments (4a to 4f) are adjacent to one another and can be activated independently of one another, in such a way that the at least two surface segments (4a to 4f) are illuminable independently of one another.

2. Light fixture according to claim 1, **characterised in that** a near-field sensor (12a to 12f), in particular a high frequency sensor, preferably a radar sensor, for detecting manual activation movement or activation presence in the near-field in front of the respective surface segment (4a to 4f), is associated with the at least two illuminable surface segments (4a to 4f) and is operationally connected to the at least one illuminant (13a to 13f) associated with the respective surface segment (4a to 4f).

3. Light fixture according to any one of the preceding claims, **characterised in that** the near-field sensors (12a to 12f) are arranged behind the illuminable surface segments (4a to 4f).

4. Light fixture according to any one of the preceding claims, **characterised in that** the illuminable surface segments (4a to 4f) are made of in particular opaque plastics material or glass, or comprise a layer of a material of this type.

5. Light fixture according to any one of the preceding claims, **characterised in that** the at least two illuminable surface segments (4a to 4f) are arranged at an angle to one another, preferably at a right angle.

6. Light fixture according to any one of the preceding claims, **characterised in that** the light fixture (3) is formed as a rectangular prism, preferably a cube, in particular with planar surface segments (4a to 4f).

7. Light fixture according to any one of the preceding claims, **characterised in that** the outer surface of the light fixture (3) is completely formed from illuminable surface segments (4a to 4f), or consists of a combination of at least two illuminable surface segments (4a to 4f) and at least one non-illuminable surface segment (4a to 4f).

8. Light fixture according to any one of the preceding claims, **characterised in that** means for attaching the light fixture (3) to a wall, to a cover or to a stand (2), in particular a pillar-shaped stand, are provided.

9. Light fixture according to any one of the preceding claims, **characterised in that** the illuminants (13a to 13f) of the at least two illuminable surface segments (4a to 4f) are arranged in a common space, in such a way that they each illuminate exclusively the surface segment (4a to 4f) associated with them.

10. Light fixture according to any one of claims 1 to 8, **characterised in that** a chamber (9a to 9f) is associated with each of the at least two illuminable surface segments (4a to 4f), is arranged inside the light fixture (3), is externally delimited by the respective surface segment and receives the illuminants (13a to 13f) associated with the respective surface segment (4a to 4f), illumination of surface segments (4a to 4f) arranged adjacent to the chamber (9a to 9f) being formed in a preventative manner in the chambers (9a to 9f) by means of the illuminants (13a to 13f) arranged in the chamber (9a to 9f)

11. Light fixture according to claim 10, **characterised in that** at least one of the illuminable surface segments (4a to 4f) has a three-dimensional upper surface.

12. Light fixture according to either claim 10 or claim 11, **characterised in that** a plurality of chambers (9a to 9f), preferably each chamber (9a to 9f), preferably on the side remote from the associated surface segment (4a to 4f) is/are delimited by a circuit board (14a to 14f) carrying the respective illuminants (13a to 13f) and the associated near-field sensor (12a to 12f) in each case.

13. Light fixture according to any one of claims 10 to 12, **characterised in that** two adjacent chambers (9a to 9f) are separated from one another in each case by a thermally conductive reflector element (16) which is arranged at an angle to the to the respective associated surface segment (4a to 4f), the reflector element (16) being connected to the circuit board (14a to 14f), in particular to a preferably metal circuit board frame (17a to 17f), in a thermally conductive manner.

14. Light fixture according to any one of the preceding claims, **characterised in that** the illuminants (13a to 13f) and the near-field sensors (12a to 12f) are arranged so as to be invisible when the illuminants (13a to 13f) are turned off.

15. Light fixture according to any one of the preceding claims, **characterised in that** a common control mode controller (25) is associated with at least two near-field sensors (12a to 12f) associated with different surface segments (4a to 4f), and is formed so as to react to a simultaneous or staggered activation of the near-field sensors (12a to 12f) by activating and/or deactivating of at least one operating mode.

## Revendications

1. Luminaire comprenant au moins deux segments de surface (4a à 4f) éclairables auxquels est respectivement associé au moins un moyen lumineux (13a à 13f) disposé derrière le segment de surface (4a à 4f) correspondant, les au moins deux moyens lumineux (13a à 13f) pouvant être activés manuellement et sans contact dans le champ de proximité devant le segment de surface (4a à 4f) correspondant,
**caractérisé en ce**
**que** les au moins deux segments de surface (4a à 4f) sont juxtaposés l'un à l'autre et peuvent être activés indépendamment l'un de l'autre, de sorte que les au moins deux segments de surface (4a à 4f) peuvent être éclairés indépendamment l'un de l'autre.

2. Luminaire selon la revendication 1, **caractérisé en ce qu'**un détecteur de champ de proximité (12a à 12f) en liaison active avec l'au moins un moyen lumineux (13a à 13f) associé au segment de surface (4a à 4f) correspondant, notamment un détecteur à haute fréquence, de préférence un détecteur radar, est à chaque fois associé aux au moins deux segments de surface (4a à 4f) éclairables afin de détecter un mouvement d'activation manuel ou une présence d'activation dans le champ proche devant le segment de surface (4a à 4f) correspondant.

3. Luminaire selon l'une des revendications précédentes, **caractérisé en ce que** les détecteurs de champ de proximité (12a à 12f) sont disposés derrière les segments de surface (4a à 4f) éclairables.

4. Luminaire selon l'une des revendications précédentes, **caractérisé en ce que** les segments de surface (4a à 4f) éclairables sont réalisés en matière plastique ou en verre, notamment opaque, ou comprennent une couche dans un matériau de ce type.

5. Luminaire selon l'une des revendications précédentes, **caractérisé en ce que** les au moins deux segments de surface (4a à 4f) éclairables sont disposés en angle l'un par rapport à l'autre, de préférence en angle droit.

6. Luminaire selon l'une des revendications précédentes, **caractérisé en ce que** le luminaire (3) est réalisé sous la forme d'un parallélépipède, de préférence un cube, notamment avec des éléments de surface (4a à 4f) plans.

7. Luminaire selon l'une des revendications précédentes, **caractérisé en ce que** la surface extérieure du luminaire (3) est entièrement formée par des segments de surface (4a à 4f) éclairables ou est constituée d'une combinaison d'au moins deux segments de surface (4a à 4f) éclairables et d'au moins un segment de surface (4a à 4f) non éclairable.

8. Luminaire selon l'une des revendications précédentes, **caractérisé en ce que** sont prévus des moyens pour fixer le luminaire (3) à un mur, à un plafond ou sur un support (2), notamment en forme de colonne.

9. Luminaire selon l'une des revendications précédentes, **caractérisé en ce que** les moyens lumineux (13a à 13f) des au moins deux segments de surface (4a à 4f) éclairables sont disposés dans un espace commun de telle sorte qu'ils éclairent exclusivement le segment de surface (4a à 4f) qui leur est associé.

10. Luminaire selon l'une des revendications 1 à 8, **caractérisé en ce qu'**à chacun des au moins deux segments de surface (4a à 4f) éclairables est associée une chambre (9a à 9f) accueillant le moyen lumineux (13a à 13f) associé au segment de surface (4a à 4f) correspondant, délimitée à l'extérieur par le segment de surface correspondant et disposée à l'intérieur du luminaire (3), les chambres (9a à 9f) étant configurées pour empêcher un éclairage des segments de surface (4a à 4f) disposés dans le voisinage de la chambre (9a à 9f) par le moyen lumineux (13a à 13f) disposé dans la chambre (9a à 9f).

11. Luminaire selon la revendication 10, **caractérisé en ce qu'**au moins l'un des segments de surface (4a à 4f) éclairables présente une surface de forme tridimensionnelle.

12. Luminaire selon l'une des revendications 10 ou 11, **caractérisé en ce que** plusieurs chambres (9a à 9f), de préférence chaque chambre (9a à 9f), de préférence sur le côté à l'opposé du segment de surface (4a à 4f) associé, sont/est délimitée(s) par un circuit imprimé (14a à 14f) qui porte à chaque fois le moyen lumineux (13a à 13f) correspondant et le détecteur de champ de proximité (12a à 12f) associé.

13. Luminaire selon l'une des revendications 10 à 12, **caractérisé en ce que** deux chambres (9a à 9f) voisines sont à chaque fois séparées l'une de l'autre par un élément réflecteur (16) conducteur de chaleur disposé en angle par rapport au segment de surface (4a à 4f) associé correspondant, l'élément réflecteur (16) étant relié avec conduction thermique au circuit imprimé (14a à 14f), notamment à un cadre de circuit imprimé (17a à 17f) de préférence métallique.

14. Luminaire selon l'une des revendications précédentes, **caractérisé en ce que** les moyens lumineux (13a à 13f) et les détecteurs de champ de proximité (12a à 12f) sont disposés de manière non visible lorsque les moyens lumineux (13a à 13f) sont éteints.

15. Luminaire selon l'une des revendications précédentes, **caractérisé en ce qu'**un contrôleur de mode de commande (25) commun est associé aux détecteurs de champ de proximité (12a à 12f) associés à au moins deux segments de surface (4a à 4f) différents, lequel est configuré pour réagir à une activation simultanée ou décalée dans le temps des détecteurs de champ de proximité (12a à 12f) par l'activation et/ou la désactivation d'au moins un mode de fonctionnement.
